# EUROPEAN PATENT APPLICATION

(11) **EP 4 614 996 A1**
(43) Date of publication of application: **10.09.2025**
(21) Application number: 23885607.4
(22) Date of filing: 25.10.2023
(51) Int. Cl.: H04Q 9/00, B60R 25/01, B60R 25/20, G01M 17/007, B60W 50/00, H04L 12/12

(54) **VEHICLE CONTROL SYSTEM, VEHICLE MANUFACTURING METHOD, PROGRAM, AND INFORMATION PROCESSING DEVICE**

(30) Priority: 31.10.2022 JP 2022174089
(71) Applicant: TOYOTA JIDOSHA KABUSHIKI KAISHA, Toyota-shi Aichi 471-8571 (JP)
(72) Inventor: YASUYAMA Shogo, Toyota-shi, Aichi 471-8571 (JP); SAWANO Takuro, Toyota-shi, Aichi 471-8571 (JP); YOKOYAMA Daiki, Toyota-shi, Aichi 471-8571 (JP)
(74) Representative: D Young & Co LLP
(86) International application number: PCT/JP2023/038450
(87) International publication number: WO 2024/095849

(57) **Abstract**

A vehicle control system that ensures security by disabling a remote or automatic vehicle control function while executing remote or automatic vehicle control is provided. Provided is a vehicle control system (100) for executing driving control and then irreversible disabling of the driving control including: a vehicle (101) equipped with a communication terminal (102) having a communication function; an ECU (103) mounted on the vehicle configured to execute the driving control of the vehicle using communication via the communication terminal; a transmission unit (104) configured to transmit, to the ECU, a control instruction value used for executing the driving control of the vehicle via the communication terminal from outside the vehicle; and a disable request unit (105) configured to request the ECU to perform the irreversible disabling of the driving control of the vehicle via the communication terminal from outside the vehicle.

## Description

### Technical Field

The present disclosure relates to a vehicle control system, a vehicle manufacturing method, a program, and an information processing apparatus.

### Background Art

Patent Literature 1 describes a disclosure of an authentication system and an authentication method that makes it possible to ensure high security. The authentication system and the authentication method described in Patent Literature 1 generates a raw value of a random number value on a vehicle side when challenge-response authentication is performed between the vehicle and a terminal. The raw value is converted into a first conversion random number in the vehicle, and a first authentication value is generated from this first conversion random number value. The first authentication value on the vehicle side is transmitted from the vehicle to the terminal and is checked against a first authentication value generated in the terminal in a manner similar to the first authentication value generated in the vehicle. Furthermore, the terminal converts the raw value of the random value received from the vehicle into a second conversion random value and generates a second authentication value from this second conversion random value. The second authentication value on the terminal side is transmitted from the terminal to the vehicle and is checked against a second authentication value generated in the vehicle in a manner similar to the second authentication value generated in the vehicle. When both the checking of the first authentication value and the second authentication value are successful, the challenge-response authentication is established.

### Citation List

### Patent Literature

Patent Literature 1: Japanese Unexamined Patent Application Publication No. 2021-129158

### Summary of Invention

However, the disclosure of Patent Literature 1 requires the installation of a true random number generator in a terminal or in-vehicle ECU (Electronic Control Unit) to generate random numbers for the generation of authentication values. In addition, when the random numbers are shared between a vehicle and a terminal, security measures such as encrypting messages using public key cryptography are required to ensure sufficient confidentiality of messages containing random numbers.

An object of the present disclosure is to provide a vehicle control system that ensures security by disabling a remote or automatic vehicle control function while executing remote or automatic vehicle control.

A vehicle control system according to the present disclosure for executing driving control and then irreversible disabling of the driving control includes:
a vehicle equipped with a communication terminal having a communication function;
an Electronic Control Unit (ECU) mounted on the vehicle configured to execute the driving control of the vehicle using communication via the communication terminal;
a transmission unit configured to transmit, to the ECU, a control instruction value used for executing the driving control of the vehicle via the communication terminal from outside the vehicle; and
a disable request unit configured to request the ECU to perform the irreversible disabling of the driving control of the vehicle via the communication terminal from outside the vehicle.

According to the above configuration, it is possible to provide a vehicle control system that ensures security by disabling a remote or automatic vehicle control function while executing remote or automatic vehicle control.

Further, in the vehicle control system according to the present disclosure,
the control instruction value is communicated using Controller Area Network (CAN) communication,
the disabling of the driving control is communicated using diagnostic communication.

According to the above configuration, it is possible to provide a vehicle control system with enhanced security at low cost by using different existing communication standards.

Furthermore, in the vehicle control system according to the present disclosure,
after the disabling of the driving control is executed, the disable is confirmed using the diagnostic communication.

With the above configuration, the disable can be confirmed using existing communication standards.

Further, in the vehicle control system according to the present disclosure,
the driving control is executed during inspection at a vehicle factory and the disable is executed before shipment.

According to the above configuration, the control of the vehicle before shipment can be performed by automatic driving.

In the vehicle control system according to the present disclosure,
the communication terminal is a dongle or a data communication module.

The aforementioned configuration is an example of a communication terminal with which a vehicle can perform communication with a remote information processing apparatus such as a server.

In the vehicle control system according to the present disclosure,
the communication terminal is collected by an operator after the driving control is disabled.

With the above configuration, communication for remote or automatic driving cannot be performed after shipment thereby ensuring security.

In the vehicle control system according to the present disclosure, the disabling of the driving control is executed by:
laser-printing a circuit onto the ECU;
deleting an application for performing the communication function stored in the ECU; or
re-writing a software for performing the communication function stored in the ECU.

With the above configuration, irreversible disabling of the driving control of the vehicle is executed whereby securing is ensured.

In the vehicle control system according to the present disclosure, disabling of the driving control is executed in any one of the following cases where:
it is detected that the vehicle has arrived at a predetermined position;
an operator has performed a specific operation;
it is confirmed with reference to production management information that there is no need to perform driving control;
a disable instruction has been received;
the vehicle has been fed with predetermined electric power by a power feeding apparatus; or
vehicle wrapping has been furnished.

The aforementioned configuration is an example of trigger for disabling of the driving control.

In the vehicle control system according to the present disclosure,
the driving control is executed based on information acquired from an image pick-up apparatus installed in a vehicle factory, and
based on information on motions of an operator captured by the image pick-up apparatus, disabling of the driving control is executed.

With the above configuration, it is possible to execute driving control using an image pick-up apparatus installed in a vehicle factory for various purposes such as safety whereby disabling of the driving control can be executed.

In the vehicle control system according to the present disclosure,
the irreversible disabling of the driving control of the vehicle is executed and then the vehicle performs a prescribed operation.

With the above configuration, an operator can confirm that the irreversible disabling of the driving control has been executed.

In the vehicle control system according to the present disclosure, the prescribed operation is any one of the following:
turning on a flashing light;
honking a horn;
operating windshield wipers;
moving wheels to the left and right; or
making a display on a monitor installed outside the vehicle.

The aforementioned configuration is an example of a prescribed operation of confirming irreversible disabling of the driving control.

A method of manufacturing a vehicle according to the present disclosure includes:
executing driving control of the vehicle by a request via a communication terminal from outside the vehicle during inspection at a vehicle factory; and
executing irreversible disabling of the driving control of the vehicle by a request via the communication terminal from outside the vehicle before shipment.

According to the above configuration, it is possible to provide a method of manufacturing a vehicle that ensures security by disabling a remote or automatic vehicle control function while executing remote or automatic vehicle control. In addition, a vehicle can be manufactured by controlling the vehicle before shipment by automatic driving.

A program for causing an ECU (Electronic Control Unit) mounted on a vehicle to execute:
driving control of a vehicle by a request via a communication terminal from outside the vehicle; and
irreversible disabling of the driving control of the vehicle by a request via the communication terminal from outside the vehicle.

According to the above configuration, it is possible to provide a program that ensures security by disabling a remote or automatic vehicle control function while executing remote or automatic vehicle control.

A server according to the present disclosure is an information processing apparatus including:
a transmission unit configured to transmit, to an ECU, a control instruction value used for executing driving control of a vehicle via a communication terminal from outside the vehicle; and
a disable request unit configured to request the ECU to perform irreversible disabling of the driving control of the vehicle via the communication terminal from outside the vehicle.

According to the present disclosure, it is possible to provide an information processing apparatus that ensures security by disabling a remote or automatic vehicle control function while executing remote or automatic vehicle control.

According to the present disclosure, it is possible to provide a vehicle control system that ensures security by disabling a remote or automatic vehicle control function while executing remote or automatic vehicle control.

### Brief Description of Drawings

Fig. 1 is an overview diagram of a vehicle control system according to an embodiment.
Fig. 2 is a block diagram showing a configuration example of the vehicle control system according to the embodiment.
Fig. 3 is a flowchart of a method of manufacturing a vehicle according to the embodiment.
Fig. 4 is a schematic diagram showing a configuration of a system 50 according to a first embodiment.
Fig. 5 is a block diagram showing the configuration of the system 50.
Fig. 6 is a flowchart showing a procedure of processes for controlling the traveling of a vehicle 400 according the first embodiment.
Fig. 7 is an explanatory diagram showing a schematic configuration of a system 50v according to a second embodiment.
Fig. 8 is a flowchart showing a procedure of processes for controlling the traveling of a vehicle 400v according to the second embodiment.

### Description of Embodiments

### Embodiment

An embodiment of the present disclosure will be described below with reference to the drawings. However, the disclosure set forth in the claims is not limited to the following embodiment. Also, not all of the configurations described according to the embodiment are essential as means to solve the problem. For clarity of explanation, the following descriptions and drawings have been omitted and simplified as appropriate. In each drawing, the same elements are denoted by the same symbols, and repeated descriptions have been omitted as necessary.

### (Description of vehicle control system according to embodiment)

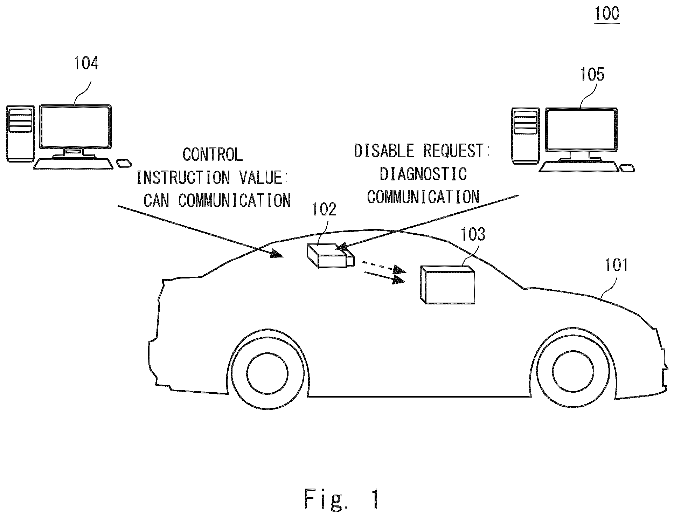

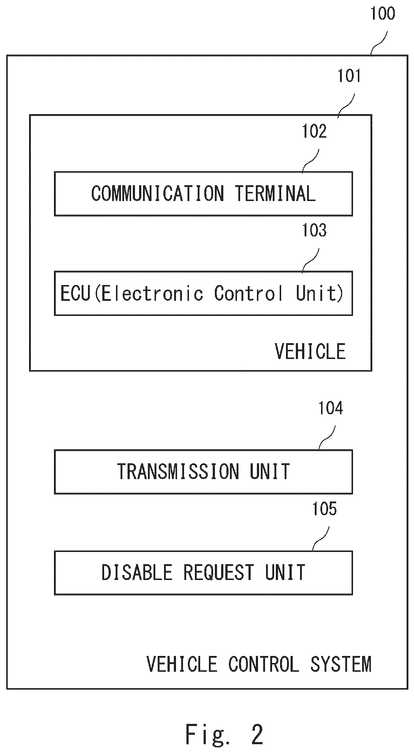

Fig. 1 is an overview diagram of a vehicle control system according to an embodiment. Fig. 2 is a block diagram showing a configuration example of the vehicle control system according to the embodiment. The vehicle control system according to the embodiment will be described with reference to Figs. 1 and 2.

A vehicle control system 100 is used, for example, in a vehicle manufacturing plant. In manufacturing of vehicles, it is necessary to move the vehicles by remote or automatic control during inspection and to disable remote or automatic control before shipment. Remote or automatic control at the time of inspection enables the vehicles to be operated unattended, making it difficult to cause man-made accidents. Further, remote or automatic control is disabled before shipment to prevent the vehicles from being controlled remotely during use. The vehicle control system 100 allows the vehicle to be controlled before shipment by automatic driving.

As shown in Figs. 1 and 2, the vehicle control system 100 includes a vehicle 101, a communication terminal 102, an ECU (Electronic Control Unit) 103, a transmission unit 104, and a disable request unit 105.

The vehicle 101 can be used in any vehicle manufactured. The vehicle 101 is a vehicle manufactured and inspected, such as passenger cars, trucks, buses, and construction vehicles.

The communication terminal 102 is a terminal having a communication function to communicate with apparatuses outside the vehicle. The communication terminal 102 is a wireless communication terminal mounted on the vehicle 101, such as a dongle. The dongle is collected by an operator before shipment after the remote or automatic control is disabled. Further, the communication terminal may be a data communication module (DCM). The communication terminal 102 may be a wired communication terminal. The communication terminal 102 can communicate using common CAN (Controller Area Network) communication and diagnostic communication for vehicle control and inspection. CAN communication is a communication standard that enables transmission or reception in multiple directions. Diagnostic communication is a communication standard that allows one-to-one correspondence between requests and responses, and is used for diagnosing faults.

The ECU 103 is a general ECU, such as a brake ECU, which is mounted on the vehicle 101 and controls the vehicle 101. The ECU 103 remotely or automatically controls driving of the vehicle using communication via a communication terminal. Therefore, the ECU 103 controls an actuator of the vehicle in accordance with a control instruction value via CAN communication. Control instruction value is data necessary for performing driving control, such as steering angle, acceleration, map and path information for automatic driving, video image and so on. Driving control is control of acceleration, velocity, steering angle, and so on. The ECU 103 also irreversibly disables the remote or automatic driving control of the vehicle in response to an instruction via diagnostic communication after executing the remote or automatic driving control. To this end, the ECU 103 includes a Field Programmable Gate Array (FPGA) and a secure microcomputer equipped with a flash memory or the like. The ECU 103 includes, for example, a hardware security module. Security can be enhanced at low cost by using different existing communication standards.

The transmission unit 104 is an information processing apparatus outside the vehicle such as a control PC (Personal Computer). The transmission unit 104 transmits, to the ECU 103, control instruction value for performing remote or automatic driving control of the vehicle from outside of the vehicle 101 via a communication terminal 102. Therefore, the transmission unit 104 transmits control instruction value for performing remote or automatic driving control of the vehicle 101 via CAN communication.

The disable request unit 105 is an information processing apparatus outside the vehicle, such as an electronic inspection apparatus. The disable request unit 105 requests the ECU 103 from outside the vehicle 101 via the communication terminal 102 to irreversibly disable the remote or automatic driving control of the vehicle. Therefore, the disable request unit 105 requests the vehicle 101 to disable the remote or automatic driving control via the diagnostic communication.

Although it is described here that the transmission unit 104 is an information processing apparatus different from the disable request unit 105, it may be the same information processing apparatus. The information processing apparatus may be one information processing apparatus or a plurality of information processing apparatuses. **In** addition, some or all of the functions of the information processing apparatuses can be distributed in the cloud. It is stated that there is only one communication terminal 102. However, there may be a plurality of communication terminals 102, and different communication terminals may be used for different communication standards.

Using these apparatuses, the vehicle control system 100 executes the remote or automatic driving control and then the irreversible disabling of the remote or automatic driving control. Irreversible disabling of the driving control can be carried out by burning a circuit used for remote or automatic driving control. The circuit may be burned using a fuse or may be short-circuited by soldering. Alternatively, irreversible disabling of the driving control may be carried out by deleting an application for remote or automatic driving control from the software installed in vehicle or re-writing the software installed in the vehicle.

Irreversible disabling of the driving control of the vehicle can be triggered when the vehicle comes to a predetermined position. Examples of a predetermined position include a position where the vehicle will be at the end of the processes at a factory, a stand-by position before shipment, and a position where the vehicle need not be moved remotely or automatically. A predetermined position may be acquired by an information processing apparatus or a vehicle.

Irreversible disabling of the driving control of the vehicle can be triggered when an operator carries out a predetermined operation. Examples of a predetermined operation include operating a turn signal, or when an image of the operator is captured with an imaging device, the operator takes a predetermined operation, such as taking a predetermined posture. As described above, a predetermined process carried out by an operator may be acquired by an information processing apparatus or a vehicle.

Irreversible disabling of the driving control of the vehicle can be triggered when production management information is referred to and it is confirmed that there is no need to perform any driving control. Production management information refers to information on which vehicle is where at this time. The information processing apparatus may refer to the production management information and have the transmission unit 104 transmit the disable instruction transmitted.

Irreversible disabling of the driving control may be triggered when a disable instruction of the remote or automatic driving control is received. For example, the transmission unit 104 of the information processing apparatus transmits a disable instruction.

Irreversible disabling of the driving control may be triggered upon completion of feeding predetermined power to a vehicle by a power feeding apparatus. The time at which power feeding of the vehicle has started may be recorded by the image pick-up apparatus, and the image processing apparatus may be notified of the completion of the power feeding after elapse of a certain feeding time. Alternatively, the trigger may be detecting completion of the power feeding by monitoring the State of Charge (SOC) of the vehicle.

Irreversible disabling of the driving control may be triggered upon completion of vehicle wrapping by an operator. Vehicle wrapping refers to affixing a protective seal (furnishing a film) on a vehicle before shipment.

After the disabling of the driving control is executed, the disable is confirmed using the diagnostic communication. **In** this way, the disable can be confirmed using existing communication standards. If the disable has not been executed, the disable request unit 105 communicates for disable again.

**In** addition to using diagnostic communication to confirm the disabling of the driving control, it may be visually confirmed through human eyes. For example, the vehicle may perform a prescribed operation after the irreversible disabling of the driving control has been performed. Examples of a prescribed operation include turning on a flashing light, honking a horn, operating windshield wipers, moving wheels to the left and right, and making a display of completion of the operation on a monitor installed outside the vehicle.

Upon confirming the prescribed action, the operator gets inside the vehicle and collects the dongle or operates the vehicle to the next destination.

In this way, the existing technique can be used to provide a vehicle control system that ensures security by disabling the vehicle control function remotely or automatically while executing vehicle control remotely or automatically. Therefore, an inexpensive and secure system can be constructed.

### (Description of vehicle manufacturing method according to embodiment)

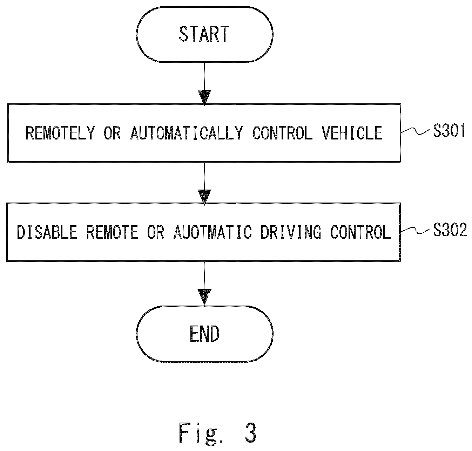

Fig. 3 is a flowchart of the method for manufacturing a vehicle according to the embodiment. The method of manufacturing a vehicle according to the embodiment will be described with reference to Fig. 3.

The method of manufacturing a vehicle according to the embodiment uses the vehicle control system 100. First, the vehicle 101 is controlled remotely or automatically (Step S301). After the vehicle is assembled in a vehicle factory, the vehicle is operated and controlled remotely or automatically in response to a request transmitted from outside the vehicle 101 through the communication terminal 102 during inspection. In order to do so, the transmission unit 104 transmits a control instruction value for the vehicle 101 to the ECU 103 using the CAN communication via the communication terminal 102. Then, the ECU 103 receives the control instruction value. Driving control is implemented by the ECU 103, and the vehicle travels by the remote control.

Next, the remote or automatic driving control is disabled (Step S302). The irreversible disabling of the remote driving control of the vehicle is performed by a request via a communication terminal from outside the vehicle prior to shipment. Therefore, when remote or automatic vehicle control is no longer required, the disable request unit 105 transmits a disable request to the ECU 103 using the diagnostic communication via the communication terminal 102. Next, the ECU 103 receives the disable request. Finally, the ECU 103 transitions to a state in which receiving the control instruction value from the transmission unit 104 is disabled. Security is thereby ensured.

In this manner, it is possible to provide a method of manufacturing a vehicle that ensures security by disabling the remote or automatic vehicle control function while performing remote or automatic vehicle control. In addition, a vehicle can be manufactured by controlling the vehicle before shipment by automatic driving.

### (Description of system according to first embodiment)

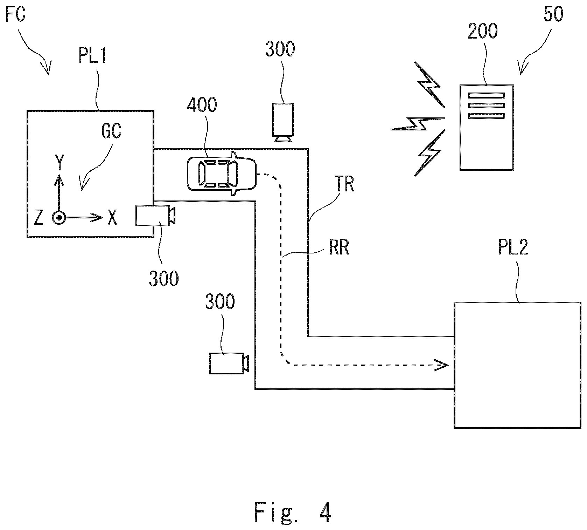

Fig. 4 is a schematic diagram showing a configuration of a system 50 according to a first embodiment. The system 50 includes at least one vehicle 400 as a mobile object, a sever 200, and at least one external sensor 300.

In the present disclosure, the "mobile object" refers to a movable object, and may be a vehicle or an electric VTOL (vertical takeoff and landing) vehicle (so-called a flying car). Further, a vehicle may refer to vehicles that travel on wheels or endless tracks, and may be, for example, a passenger car, a truck, a bus, a two-wheeled vehicle, a four-wheeled vehicle, a tank, a construction vehicle, or other vehicles. Note that examples of a vehicle includes Battery Electric Vehicle (BEV), gasoline-powered vehicles, hybrid vehicles, and fuel-cell vehicles. Note that when the mobile object is an object other than the vehicle, each of the terms "vehicle" and "car" in the present disclosure can be replaced with a "mobile object" as appropriate, and the term "traveling" can be replaced with "movement" as appropriate.

The vehicle 400 is configured to be able to travel by an unattended operation. The "unattended operation" means an operation (e.g., driving) that does not rely on a traveling operation performed by an occupant (e.g., a driver). The traveling operation means an operation related to at least one of "running", "turning", and "stopping" of the vehicle 400. The unattended operation is carried out by automatic or manual remote control using an apparatus located outside the vehicle 400, or by autonomous control of the vehicle 400. An occupant (e.g., a driver or a passenger) who does not perform a traveling operation may be on board the vehicle 400 which is traveling by an unattended operation. Examples of occupants who do not perform a traveling operation include a person simply sitting in a seat of the vehicle 400 and a person who performs an operation other than the traveling operation, such as assembling, inspecting, and operating switches while being on board the vehicle 400. Note that the operation (e.g., driving) by a traveling operation performed by an occupant may be referred to as a "manned operation".

**In** this specification, the "remote control" includes "full remote control" in which all the operations of the vehicle 400 are completely determined from the outside of the vehicle 400, and "partial remote control" in which some of the operations of the vehicle 400 are determined from the outside of the vehicle 400. Further, the "autonomous control" includes "full autonomous control" in which the vehicle 400 autonomously controls its own operations without receiving any information from an apparatus located outside the vehicle 400, and "partial autonomous control" in which the vehicle 400 autonomously controls its own operations by using information received from an apparatus located outside the vehicle 400.

In this embodiment, the system 50 is used in a factory FC in which vehicles 400 are manufactured. The reference coordinate system of the factory FC is a global coordinate system GC. That is, any position in the factory FC is represented by X, Y and Z-coordinates in the global coordinate system GC. The factory FC includes a first place PL1 and a second place PL2. The first and second places PL1 and PL2 are connected to each other by a track TR (e.g., passageway) on which a vehicle 400 can travel. The factory FC includes a plurality of external sensors 300 along the track TR. The positions of the external sensors 300 in the factory FC are adjusted in advance. The vehicle 400 moves from the first place PL1 to the second place PL2 through the track TR by an unattended operation.

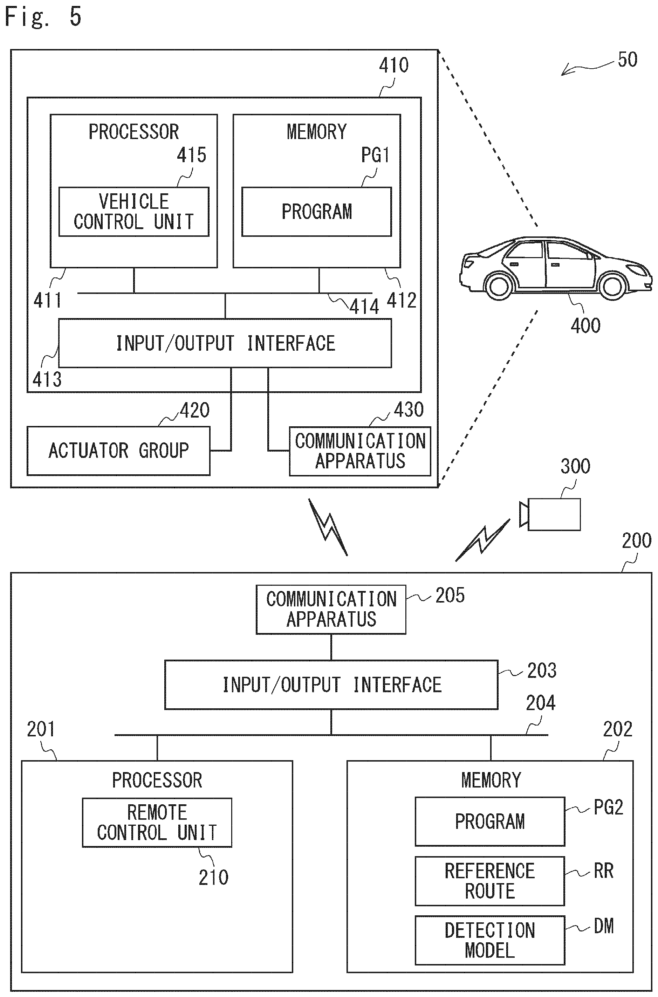

Fig. 5 is a block diagram showing a configuration of the system 50. The vehicle 400 includes a vehicle control apparatus 410 for controlling various units of the vehicle 400, an actuator group 420 including at least one actuator driven under the control of the vehicle control apparatus 410, and a communication apparatus 430 for communicating with an external apparatus such as the server 200 through wireless communication. The actuator group 420 includes an actuator of a driving unit for accelerating the vehicle 400, an actuator of a steering unit for changing the traveling direction of the vehicle 400, and an actuator of a braking unit for decelerating the vehicle 400.

The vehicle control apparatus 410 is composed of a computer including a processor 411, a memory 412, an input/output interface 413, and an internal bus 414. The processor 411, the memory 412, and the input/output interface 413 are connected to each other through the internal bus 414 so that they can bidirectionally communicate with each other. The actuator group 420 and the communication apparatus 430 are connected to the input/output interface 413. The processor 411 implements various functions including the function as the vehicle control unit 415 by executing a program PG1 stored in the memory 412.

The vehicle control unit 415 causes the vehicle 400 to be driven by controlling the actuator group 420. The vehicle control unit 415 can cause the vehicle 400 to be driven by controlling the actuator group 420 by using a driving control signal received from the server 200. The driving control signal is a control signal for causing the vehicle 400 to be driven. In this embodiment, the driving control signal includes an acceleration and a steering angle of the vehicle 400 as parameters. In other embodiments, the driving control signal may include a speed of the vehicle 400 as a parameter instead of or in addition to the acceleration of the vehicle 400.

The server 200 is composed of a computer including a processor 201, a memory 202, an input/output interface 203, and an internal bus 204. The processor 201, the memory 202, and the input/output interface 203 are connected through the internal bus 204 so that they can bidirectionally communicate with each other. A communication apparatus 205 for communicating with various apparatuses located outside the server 200 is connected to the input/output interface 203. The communication apparatus 205 can communicate with the vehicle 400 through wireless communication, and can communicate with each of the external sensors 300 through wired communication or wireless communication. The processor 201 implements various functions including the function as the remote-control unit 210 by executing a program PG2 stored in the memory 202.

The remote-control unit 210 acquires a detection result obtained by a sensor, generates a driving control signal for controlling the actuator group 420 of the vehicle 400 by using the detection result, and transmits the generated driving control signal to the vehicle 400. In this way, the remote-control unit 210 causes the vehicle 400 to be driven by remote control. The remote-control unit 210 may generate and output control signals for controlling the actuators configured to operate various auxiliary equipment installed in the vehicle 400 and various equipment such as windshield wipers, power windows, and vehicle lamps. That is, the remote-control unit 210 may be configured to operate the aforementioned various equipment and various auxiliary equipment.

The external sensor 300 is a sensor located outside the vehicle 400. The external sensor 300 in this embodiment is a sensor for capturing (e.g., finding and keeping track of) the vehicle 400 from outside the vehicle 400. The external sensor 300 includes a communication apparatus (not shown) and can communicate with other apparatuses such as the server 200 through wired communication or wireless communication.

Specifically, the external sensor 300 is formed by a camera (e.g., a still camera or a video camera). A camera, which functions as the external sensor 300, takes an image (e.g., a still image or a moving image) including (i.e., showing therein) the vehicle 400 and outputs the taken image as a detection result.

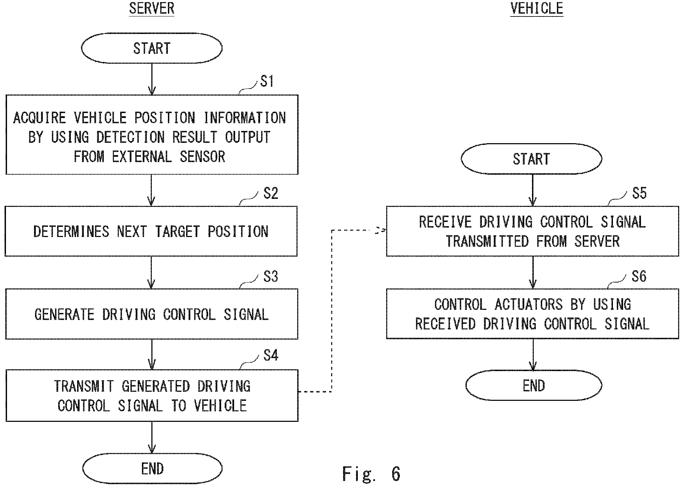

Fig. 6 is a flowchart showing a procedure of processes for controlling the traveling of a vehicle 400 according to the first embodiment. In the procedure of processes shown in Fig. 6, the processor 201 of the server 200 functions as the remote-control unit 210 by executing the program PG2. Further, the processor 411 of the vehicle 400 functions as the vehicle control unit 415 by executing the program PG1.

In Step S1, the processor 201 of the server 200 acquires vehicle position information of the vehicle 400 by using a detection result output from the external sensor 300. The vehicle position information is position information based on which a driving control signal is generated. In this embodiment, the vehicle position information includes the position and orientation of the vehicle 400 in the global coordinate system GC of the factory FC. Specifically, in Step S1, the processor 201 acquires vehicle position information by using the photographed image acquired from the camera serving as the external sensor 300.

Specifically, in Step S1, the processor 201 acquires the position of the vehicle 400 by, for example, detecting the external shape of the vehicle 400 from the photographed image, calculating the coordinates of the positioning point of the vehicle 400 in the coordinate system of the photographed image, i.e., in the local coordinate system, and converting the calculated coordinates into coordinates in the global coordinate system GC. The external shape of the vehicle 400 included (i.e., shown) in the photographed image can be detected by, for example, inputting the photographed image into a detection model DM using artificial intelligence. The detection model DM is prepared, for example, in the system 50 or outside the system 50, and stored in the memory 202 of the server 200 in advance. Examples of the detection model DM include a trained machine-learning model that has been trained to perform either semantic segmentation or instance segmentation. As this machine-learning model, for example, a convolutional neural network (hereinafter also referred to as a CNN) trained through supervised learning using a learning data set can be used. The learning data set includes, for example, a plurality of training images each including the vehicle 400 and labels each indicating whether a respective area in the training image is an area indicating the vehicle 400 or an area that does not indicate the vehicle 400. When the CNN is trained, it is preferred that parameters of the CNN are updated by backpropagation (error back-propagation method) so that errors between output results by the detection model DM and labels are reduced. Further, the processor 201 can acquire the orientation of the vehicle 400 by, for example, estimating it based on the orientation of the moving vector of the vehicle 400 calculated from changes in the positions of the feature points of the vehicle 400 between frames of the photographed images by using an optical flow method.

In Step S2, the processor 201 of the server 200 determines a target position to which the vehicle 400 should go next. In this embodiment, the target position is represented by X, Y and Z-coordinates in the global coordinate system GC. In the memory 202 of the server 200, a reference route RR, which is a route along which the vehicle 400 should travel, is stored in advance. A route is represented by a node indicating a starting point, a node(s) indicating a passing point(s), a node indicating a destination, and links connecting these nodes with one another. The processor 201 determines a target position to which the vehicle 400 should go next by using the vehicle position information and the reference route RR. The processor 201 determines the target position of the vehicle 400 ahead of the current position thereof on the reference route RR.

In Step S3, the processor 201 of the server 200 generates a driving control signal for causing driving the vehicle 400 to be driven toward the determined target position. The processor 201 calculates the traveling speed of the vehicle 400 based on the changes in the position of the vehicle 400, and compares the calculated traveling speed with the target speed. When the traveling speed is lower than the target speed, the processor 201 determines, as a whole, the acceleration of the vehicle 400 so that the vehicle 400 accelerates, whereas when the traveling speed is higher than the target speed, the processor 201 determines the acceleration so that the vehicle 400 decelerates. Further, when the vehicle 400 is positioned on the reference route RR, the processor 201 determines the steering angle and the acceleration of the vehicle 400 so that the vehicle 400 does not deviate from the reference route RR, whereas when the vehicle 400 is not positioned on the reference route RR, i.e., the vehicle 400 has deviated from the reference route RR, the processor 201 determines the steering angle and the acceleration so that the vehicle 400 returns to the reference route RR.

In Step S4, the processor 201 of the server 200 transmits the generated driving control signal to the vehicle 400. The processor 201 repeats the acquisition of the position of the vehicle 400, the determination of a target position, the generation of a driving control signal, the transmission of the driving control signal, and the like in a predetermined cycle.

In Step S5, the processor 411 of the vehicle 400 receives the driving control signal transmitted from the server 200. In Step S6, the processor 411 of the vehicle 400 controls the actuator group 420 by using the received driving control signal, and thereby causing the vehicle 400 to be driven at the acceleration and the steering angle indicated by the driving control signal. The processor 411 repeats the reception of a driving control signal and the control of the actuator group 420 at a predetermined cycle. According to the system 50 in this embodiment, it is possible to cause the vehicle 400 to be driven by remote control, and thereby move the vehicle 400 without using conveyance equipment such as a crane or a conveyor.

### (Description of system according to second embodiment)

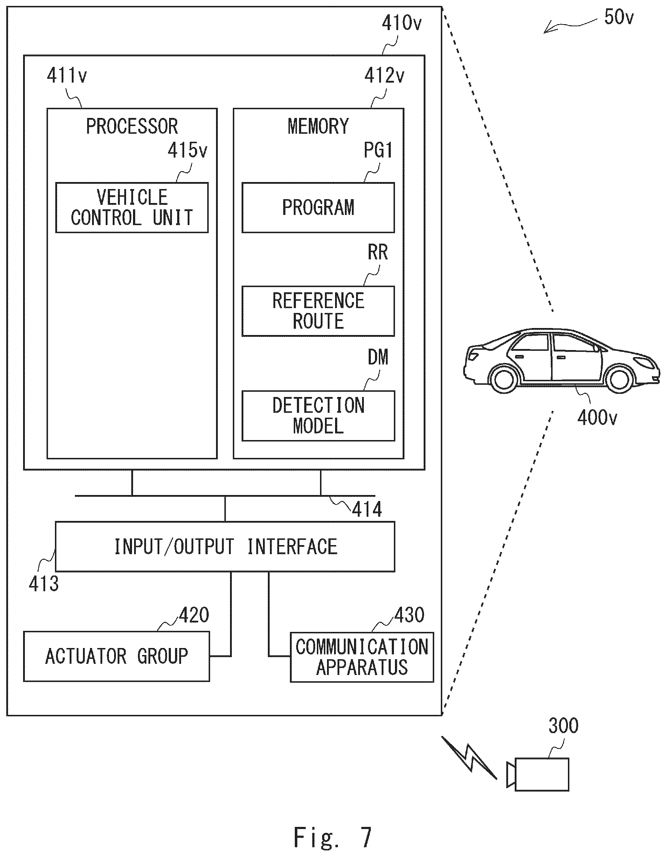

Fig. 7 is an explanatory diagram showing a schematic configuration of a system 50v according to a second embodiment. This embodiment differs from the first embodiment in that the system 50v does not include the server 200. Further, a vehicle 400v according to the present embodiment can travel by autonomous control performed by the vehicle 400v itself. The rest of the configuration is the same as that described in the first embodiment unless otherwise specified.

In this embodiment, a processor 411v of a vehicle control apparatus 410v functions as a vehicle control unit 415v by executing a program PG1 stored in a memory 412v. The vehicle control unit 415v acquires an output result obtained by a sensor, generates a driving control signal by using the output result, and outputs the generated driving control signal and thereby operates the actuator group 420. By doing so, the vehicle control unit 415v can make the vehicle 400v travel by autonomous control performed by the vehicle 400v itself. In this embodiment, in addition to the program PG1, a detection model DM and a reference route RR are stored in the memory 412v in advance.

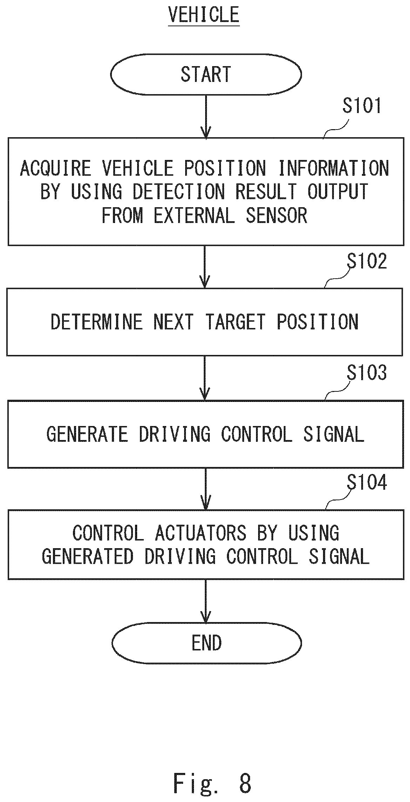

Fig. 8 shows a flowchart showing a procedure of processes for controlling the traveling of the vehicle 400v according to the second embodiment. In the processing procedure shown in Fig. 8, the processor 411v of the vehicle 400v functions as the vehicle control unit 415v by executing the program PG1.

In Step S101, the processor 411v of the vehicle control apparatus 410v acquires vehicle position information by using a detection result output from a camera which is an external sensor 300. In Step S102, the processor 411v determines a target position to which the vehicle 400v should go next. In Step S103, the processor 411v generates a driving control signal for making the vehicle 400v travel toward the determined target position. In Step S104, the processor 411v controls the actuator group 420 by using the generated driving control signal, and thereby makes the vehicle 400v travel according to parameters indicated by the driving control signal. The processor 411v repeats the acquisition of vehicle position information, the determination of a target position, the generation of a driving control signal, and the control of actuators in a predetermined cycle. According to the system 50v in this embodiment, it is possible to make the vehicle 400v travel by autonomous control performed by the vehicle 400v itself without having the server 200 remotely control the vehicle 400v.

### (YY: Other Embodiments)

(YY1) In the above-described embodiments, the external sensor 300 is a camera. However, the external sensor 300 may not be a camera and may be, for example, LiDAR (Light Detection And Ranging). In this case, the detection result output from the external sensor 300 may be 3D (three-dimensional) point cloud data representing the vehicle 400. In this case, the server 200 and the vehicle 400 may acquire vehicle position information by template matching between the 3D point cloud data, which is the detection result, and reference point cloud data prepared in advance.

(YY2) In the first embodiment described above, a series of processes from the acquisition of vehicle position information to the generation of a driving control signal are performed by the server 200. However, at least some of the processes from the acquisition of vehicle position information to the generation of a driving control signal may be performed by the vehicle 400. For example, the below-shown Embodiments (1) to (3) may be adopted.

(1) The server 200 may acquire vehicle position information, determine a target position to which the vehicle 400 should go next, and generate a route from the current position of the vehicle 400 indicated by the acquired vehicle position information to the target position. The server 200 may generate a route to a target position which is located between the current position and the destination, or generate a route to the destination. The server 200 may transmit the generated route to the vehicle 400. The vehicle 400 may generate a driving control signal so as to travel along the route received from the server 200, and control the actuator group 420 by using the generated driving control signal.
(2) The server 200 may acquire vehicle position information and transmit the acquired vehicle position information to the vehicle 400. The vehicle 400 may determine a target position to which the vehicle 400 should go next, generate a route from the current position of the vehicle 400 indicated by the received vehicle position information to the target position, generate a driving control signal so as to travel along the generated route, and control the actuator group 420 by using the generated driving control signal.
(3) **In** the above-described Embodiments (1) and (2), the vehicle 400 may be equipped with an internal sensor, and a detection result output from the internal sensor may be used for at least either the generation of a route or the generation of a driving control signal. The internal sensor is a sensor provided in the vehicle 400. Examples of internal sensors may include a sensor for detecting the motion state of the vehicle 400, a sensor for detecting the operation state of each unit of the vehicle 400, and a sensor for detecting the environment around the vehicle 400. Specifically, examples of internal sensors include a camera, LiDAR, a millimeter-wave radar, an ultrasonic sensor, a GPS sensor, an acceleration sensor, and a gyro sensor. For example, in the above-described Embodiment (1), the server 200 may acquire a detection result obtained by the internal sensor, and when generating a route, take the detection result of the internal sensor into consideration in the generation of the route. In the above-described Embodiment (1), the vehicle 400 may acquire a detection result obtained by the internal sensor, and when generating a driving control signal, take the detection result of the internal sensor into consideration in the generation of the driving control signal. In the above-described Embodiment (2), the vehicle 400 may acquire a detection result obtained by the internal sensor, and when generating a route, take the detection result of the internal sensor into consideration in the generation of the route. In the above-described Embodiment (2), the vehicle 400 may acquire a detection result obtained by the internal sensor, and when generating a driving control signal, take the detection result of the internal sensor into consideration in the generation of the driving control signal.

(YY3) In the second embodiment described above, the vehicle 400v may be equipped with an internal sensor, and a detection result output from the internal sensor may be used for at least either the generation of a route or the generation of a driving control signal. For example, the vehicle 400v may acquire a detection result obtained by the internal sensor, and when generating a route, take the detection result of the internal sensor into consideration in the generation of the route. The vehicle 400v may acquire a detection result obtained by the internal sensor, and when generating a driving control signal, take the detection result of the internal sensor into consideration in the generation of the driving control signal.

(YY4) In the second embodiment described above, the vehicle 400v acquires vehicle position information by using a detection result obtained by an external sensor 300. However, the vehicle 400v may be equipped with an internal sensor, and the vehicle 400v may acquire vehicle position information by using the detection result of the internal sensor, determine a target position to which the vehicle 400v should go next, generate a route from the current position of the vehicle 400v indicated by the acquired vehicle position information to the target position, generate a driving control signal for traveling along the generated route, and control the actuator group 420 by using the generated driving control signal. In this case, the vehicle 400v can travel without using the detection result of the external sensor 300 at all. Note that the vehicle 400v may acquire a target arrival time and traffic congestion information from outside the vehicle 400v and take the target arrival time and traffic congestion information into consideration in at least either the generation of a route or the generation of a driving control signal. Further, all the functions of the system 50v may be provided in the vehicle 400v. That is, the whole processing implemented by the system 50v according to the present disclosure may be implemented by the vehicle 400v alone.

(YY5) In the first embodiment described above, the server 200 automatically generates a driving control signal to be transmitted to the vehicle 400. However, the server 200 may generate a driving control signal to be transmitted to the vehicle 400 according to an operation performed by an operator who is present outside the vehicle 400. For example, an operator present outside the vehicle 400 may operate a controlling apparatus including a display for displaying a photographed image output from an external sensor 300, a steering wheel, an accelerator pedal, and a brake pedal for remotely controlling the vehicle 400, and a communication apparatus for communicating with the server 200 through wired communication or wireless communication. Then, the server 200 may generate a driving control signal according to operations performed on the controlling apparatus.

(YY6) In each of the above-described embodiments, the vehicle 400 may have a configuration capable of moving by an unattended operation. For example, the vehicle 400 may be in the form of a platform including the below-described configuration. Specifically, the vehicle 400 may include at least a vehicle control apparatus 410 and an actuator group 420 in order to perform three functions of "running", "turning", and "stopping" by an unattended operation. In the case where the vehicle 400 acquires information from the outside the vehicle 400 in order to perform an unattended operation, the vehicle 400 may further include a communication apparatus 130. That is, the vehicle 400 capable of moving by an unattended operation may not include at least some of interior components such as a driver's seat and a dashboard, may not include at least some of exterior components such as a bumper and a fender, and may not include a body shell. In this case, the remaining components such as a body shell may be attached to the vehicle 400 until the vehicle 400 is shipped from the factory FC. Alternatively, the vehicle 400 may be shipped from the factory FC without the remaining components such as a body shell, and then these remaining components such as a body shell may be attached to the vehicle 400 after the shipment. These components may be attached from arbitrary directions such as from above, from below, from front, from rear, from the right side, or from the left side of the vehicle 400. Further, they may be attached from the same direction or from different directions. Note that in the case of being formed as a platform, its position may be determined in the same manner as the position of the vehicle 400 is determined in the first embodiment.

(YY7) The vehicle 400 may be manufactured by combining a plurality of modules with each other. A module herein refers to a unit composed of a plurality of components that are assembled according to the place in the vehicle 400 at which the module is used and/or according to the function in the vehicle 400. For example, the platform of the vehicle 400 may be manufactured by combining a front module constituting the front part of the platform, a center module constituting the central part of the platform, and a rear module constituting the rear part of the platform with each other. Note that the number of modules constituting the platform is not limited to three, but may be two or less, or four or more. Further, in addition to or instead of the components constituting the platform, components constituting a part of the vehicle 400 other than the platform may be assembled into a module. Further, various modules include optional exterior components such as a bumper and a grill, and optional interior components such as a seat and a console. Further, what is manufactured is not limited to the vehicle 400. That is, any type of mobile object may be manufactured by combining a plurality of modules with each other. Such modules may be manufactured, for example, by joining a plurality of components by welding or by using fixtures, or may be manufactured by integrally molding at least some of the components constituting the module into one component by casting. A molding method for integrally molding one component, particularly a relatively large component, may also be called giga-casting or mega-casting. For example, the aforementioned front module, the center module, and the rear module may be manufactured by giga-casting.

(YY8) The conveyance of a vehicle 400 that is carried out by making the vehicle 400 travel by an unattended operation is also called "self-propelled conveyance". Further, the configuration for carrying out self-propelled conveyance is also called a "vehicle remote control autonomous traveling conveyance system". Further, the production method for producing vehicles 400 by using self-propelled conveyance is also called "self-propelled production". In the self-propelled production, for example, at least some of the conveyance of vehicles 400 is carried out by self-propelled conveyance in the factory FC in which vehicles 400 are manufactured.

(YY9) In each of the above-described embodiments, some or all of the functions and processes implemented by software may be implemented by hardware. Further, some or all of the functions and processes implemented by hardware may be implemented by software. As the hardware for implementing various functions in each of the above-described embodiments, various circuits such as integrated circuits and/or discrete circuits may be used.

In addition, part or all of the processing in the ECU 103 and the information processing apparatus described above can be implemented as a computer program. Such a program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magnetooptical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

Note that the present disclosure is not limited to the above embodiment and can be modified as appropriate without departing from the scope.

This application claims priority based on Japanese Patent Application 2022-174089 filed on October 31, 2022 and all of its disclosures are incorporated herein.

### Reference Signs List

100 VEHICLE CONTROL SYSTEM, 101 VEHICLE, 102 COMMUNICATION TERMINAL, 103 ECU, 104 TRANSMISSION UNIT, 105 DISABLE REQUEST UNIT, 50 SYSTEM, 200 SERVER, 201 PROCESSOR, 202 MEMORY, 203 INPUT/OUTPUT INTERFACE, 204 INTERNAL BUS, 205 COMMUNICATION APPARATUS, 210 REMOTE-CONTROL UNIT, 300 EXTERNAL SENSOR, 400 VEHICLE, 410 VEHICLE CONTROL APPARATUS, 411 PROCESSOR, 412 MEMORY, 413 INPUT/OUTPUT INTERFACE, 414 INTERNAL BUS, 415 VEHICLE CONTROL UNIT, 420 ACTUATOR GROUP, 430 COMMUNICATION APPARATUS, 50v SYSTEM, 400v VEHICLE, 410v VEHICLE CONTROL APPARATUS, 411v PROCESSOR, 412v MEMORY, 415v VEHICLE CONTROL UNIT

## Claims

1. A vehicle control system for executing driving control and then irreversible disabling of the driving control, the vehicle control system comprising:
a vehicle equipped with a communication terminal having a communication function;
an Electronic Control Unit (ECU) mounted on the vehicle configured to execute the driving control of the vehicle using communication via the communication terminal;
a transmission unit configured to transmit, to the ECU, a control instruction value used for executing the driving control of the vehicle via the communication terminal from outside the vehicle; and
a disable request unit configured to request the ECU to perform the irreversible disabling of the driving control of the vehicle via the communication terminal from outside the vehicle.

2. The vehicle control system according to claim 1, wherein
the control instruction value is communicated using Controller Area Network (CAN) communication,
the disabling of the driving control is communicated using diagnostic communication.

3. The vehicle control system according to claim 1, wherein after the disabling of the driving control is executed, the disable is confirmed using the diagnostic communication.

4. The vehicle control system according to claim 1, wherein the driving control is executed during inspection at a vehicle factory and the disable is executed before shipment.

5. The vehicle control system according to claim 1, wherein the communication apparatus is a dongle or a data communication module.

6. The vehicle control system according to claim 1, wherein the communication terminal is collected by an operator after the driving control is disabled.

7. The vehicle control system according to claim 1, wherein the disabling of the driving control is executed by:
burning a circuit onto the ECU;
deleting an application for performing the communication function stored in the ECU; or
re-writing a software for performing the communication function stored in the ECU.

8. The vehicle control system according to claim 1, wherein disabling of the driving control is executed in any one of the following cases where:
it is detected that the vehicle has arrived at a predetermined position;
an operator has performed a specific operation;
it is confirmed with reference to production control information that there is no need to perform driving control;
a disable instruction has been received;
the vehicle has been fed with predetermined electric power by a power feeding apparatus; or
vehicle wrapping has been furnished.

9. The vehicle control system according to claim 1, wherein
the driving control is executed based on information acquired from an image pick-up apparatus installed in a vehicle factory, and
based on information on motions of an operator captured by the image pick-up apparatus, disabling of the driving control is executed.

10. The vehicle control system according to claim 1, wherein the irreversible disabling of the driving control of the vehicle is executed and then the vehicle performs a prescribed operation.

11. The vehicle control system according to claim 10, wherein the prescribed operation is any one of the following:
turning on a flashing light;
honking a horn;
operating windshield wipers;
moving wheels to the left and right; or
making a display on a monitor installed outside the vehicle.

12. A method of manufacturing a vehicle comprising:
executing driving control of the vehicle by a request via a communication terminal from outside the vehicle during inspection at a vehicle factory; and
executing irreversible disabling of the driving control of the vehicle by a request via the communication terminal from outside the vehicle before shipment.

13. A program for causing an ECU (Electronic Control Unit) mounted on a vehicle to execute:
driving control of a vehicle by a request via a communication terminal from outside the vehicle; and
irreversible disabling of the driving control of the vehicle by a request via the communication terminal from outside the vehicle before shipment.

14. An information processing apparatus comprising:
a transmission unit configured to transmit, to an ECU, a control instruction value used for executing driving control of a vehicle via a communication terminal from outside the vehicle; and
a disable request unit configured to request the ECU to perform irreversible disabling of the driving control of the vehicle via the communication terminal from outside the vehicle.
